# EUROPEAN PATENT SPECIFICATION

(11) **EP 1 380 139 B1**
(45) Date of publication and mention of the grant of the patent: **12.03.2008**
(21) Application number: 02718478.7
(22) Date of filing: 08.04.2002
(51) Int. Cl.: H04L 12/56, H04Q 11/04

(54) **Feedback system for packet switching device with bufferless cascaded switching matrix**
System mit Rückmeldung für einen Paketvermittlungsapparat mit Bufferloser, kaskadierter Vermittlungsmatrix
Système rétroactif pour dispositif de commutation par paquet avec matrice de commutation en cascade sans tampon

(30) Priority: 11.04.2001 DE 10118126
(43) Date of publication of application: 14.01.2004
(73) Proprietor: NXP B.V., 5656 AG Eindhoven (NL)
(72) Inventor: VAN WAGENINGEN, Andries, NL-5656 AA Eindhoven (NL); REUMERMANN, Hans-Jürgen, NL-5656 AA Eindhoven (NL); LELKENS, Armand, NL-5656 AA Eindhoven (NL)
(74) Representative: Pennings, Johannes
(86) International application number: PCT/IB2002/001275
(87) International publication number: WO 2002/084953

(56) References cited:
- DE-A- 10 057 343
- US-A- 5 126 999
- PANKAJ GUPTA, NICK MCKEOWN: " Designing and Implementing a Fast Crossbar Scheduler" IEEE: MICRO, [Online] vol. 19, no. 1, February 1999 (1999-02), pages 20-28, XP002209252 Retrieved from the Internet: <URL:http://www.computer.org/micro/mi1999/ m1020abs.htm> [retrieved on 2002-08-08]

## Description

The invention relates to a packet switching device with a switching network.

In the publication "Weighted Arbitration Algorithms with Priorities for Input Queued Switches with 100% Throughput" by R. Schonen, G. Post, G. Sander, Broadband Switching Symposium'99, various, weighted switching algorithms of a packet switching device are compared. The switching algorithms attempt, with different switching steps, to prevent a collision between a plurality of packets destined for the same output port of the packet switching device and to reduce data loss or delay resulting therefrom. Cascade control and the action of a feedback system within the switching network of a packet switching device is not taken into account in this publication.

"PANKAJ GUPTA, NICK MCKEOWN: 'Designing and Implementing a Fast Crossbar Scheduler', IEEE Micro, vol.19, no.1, February 1999" shows a scheduling algorithm, which at the beginning of each time slot performs multiple iterations, each consisting three phases: 1. Request: Each input sends a request to every output, for which it has a queued cell; 2. Grant: If an output receives any requests, it sends a grant to the one that appears next in a fixed, round-robin schedule starting from the highest-priority element; 3. Accept: If an input receives a grant, it accepts the one that appears next in a fixed, round-robin schedule starting from the highest-priority element. In this document, fig. 1 shows the decision feedback information from the accept arbiters, which the scheduler uses in iterations to mask off requests from already matched inputs and outputs.

In the packet switching device according to the prior art, the input port controller has to take all granted inquiries received returned upon its sent inquiries and decide to which output port should be allocated. If the packet switching device should be constructed variable in size, the decision algorithm in each input port controller must be respectively re-programmed.

It is therefore an object of the invention to provide a packet switching device, which is adaptable in size and in which the expenses to re-program the input port controllers after a re-configuration of the size of the packet switching device is reduced.

The object is achieved by the features of the independent claims.

Therein, the switching controller matrix of the packet switching device takes on the decision which of the granted inquiries should be used as accepted allocation to connect a requesting input port with a designated output port. Therewith, in the input port, an algorithm to evaluate a plurality of received granted inquiries need not to be adapted after a reconfiguration of the packet switching device in size.

In switching data transmitted in packet form, a switching device with a bufferless switching matrix has to make use of a switching algorithm which operates as fast as possible.

A packet switching device switches the signaling data and payload data received in packet form at the input port to the appropriate output port.

During generation of a route identifier for controlling the packets by the packet switching device, a port controller responsible for the input port makes use of a table containing the routing and priority information necessary for the route identifier. The routing and priority information indicate the destination output of the packet switching device and the weighting of the inquiry. The weighting may include details of the priority and category of the packets or the queuing time or length of any queue.

The packet switching device consists of a plurality of bufferless switching matrices for connecting input ports and output ports and a plurality of switching controllers for initializing and changing the configuration of the switching matrices and a number of registers in the form of logical queues operating according to the FIFO (First In First Out) principle.

The interface between the port controller and the packet switching device may either consist of two separate lines for signaling data and payload data or part of the port controller is integrated into the packet switching device and the signaling data and payload data are transmitted in multiplexed manner jointly via one line ("in-band control").

If a bufferless switching matrix is used, a collision between a plurality of packets destined for the same output port leads to packet loss. In order to prevent this loss, the packets are stored temporarily in queues within the port controller. Since cells of uniform length are easier to handle during switching than packets of varying size, the packets arriving at the port controller are divided into cells of uniform length. After successful switching, i. e. accepted allocation of an input port with an output port, has been performed, the cells are removed from the queue.

A cell may either be sent to the packet switching device at the same time as the route identifier or the cell is conveyed separately to the packet switching device once the route identifier has arrived with an inquiry some time previously at the packet switching device and the latter has carried out its preparations for transfer of the cell. Simultaneous forwarding of route identifier and cell is known as "self-routing". It has the disadvantage that the decision is made in the port controller as to which cell is switched and collision of the cells cannot be prevented thereby. Separate forwarding of the route identifier and the cell cannot substantially reduce loss caused by cell collision.

Another option is to send the route identifier to the packet switching device with a plurality of inquiries, the latter deciding which of the inquiries is accepted in order then to carry out preparations for transfer of the selected cell. This option offers virtually loss-free cell switching.

To increase the capacity of the packet switching device, a plurality of switching matrices are operated in parallel and connected together to form a superordinate matrix. The switching matrices are each controlled individually by a switching controller.

To configure the switching matrices, a switching algorithm distributed over the switching controllers is used to enable the packet switching device to make a global decision.

If the route identifier arriving at the switching controller from the input port contains only a single inquiry for different ports, the final switching decision is applied to the output of each switching controller located in the last row.

In the event that the route identifier arriving at the switching controller from each input port contains a plurality of inquiries (in each cell period) for different output ports, a two-fold switching algorithm is used in switching. One switching algorithm is used to select an inquiry from all the input ports for each output port and the second switching algorithm is used to specify the granted inquiry of an output port for each input port. The results of the switching controllers located in the last row of a cascade are the switches resulting from the first switching algorithm. To determine the granted inquiries of an output port for the interrogating input port which sent the route identifier to the switching controller, the second switching algorithm has to be informed of the result of the first switching algorithm.

Due to the distributed switching controller circuit, a feedback mechanism is necessary to feed back the first switching result, which mechanism is located at the outputs of the switching controllers in the last row of a cascade.

If the route identifier contains a plurality of inquiries for different output ports, feedback may be achieved by various methods.

One option consists in feeding the result back in the reverse direction to the same switching controller and further to distribute it to all the switching controllers connected with said switching controller. Result feedback requires bidirectional connections between the switching controllers.

Another option consists in feeding the result coming from the last switching controller in a column to the first switching controller in the same column, such that the switching controller connections are made to form a loop. This result feedback method is known as switching controller loop-back.

The result of the last switching controller in a column may be fed back to the input port of the same switching controller. This option requires feedback of the switching controller results via an input port multiplexer.

The invention will be further described with reference to examples of embodiments shown in the drawings, to which, however, the invention is not restricted. In the Figures:
- Fig. 1: is a representation of a packet switching device with separate inputs for signaling data and payload data,
- Fig. 2: is a representation of a packet switching device with inputs for jointly multiplexed signaling data and payload data ("in-band control"),
- Fig. 3: shows a plurality of switching matrices with a plurality of switching controllers connected to form a cascade,
- Fig. 4: is a diagram showing the principle of the iterative switching steps,
- Fig. 5: shows the switching controller circuit during feedback in the reverse direction,
- Fig. 6: is a representation of the switching steps during feedback in the reverse direction,
- Fig. 7: is a representation of the switching steps during feedback in the reverse direction with bidirectional switching controller in- and outputs,
- Fig. 8: shows the switching controller circuit during loop-back
- Fig. 9: is a representation of the switching steps during loop-back
- Fig. 10: shows the switching controller circuit during feedback via an input port multiplexer
- Fig. 11: is a representation of the switching steps during feedback via an input port multiplexer

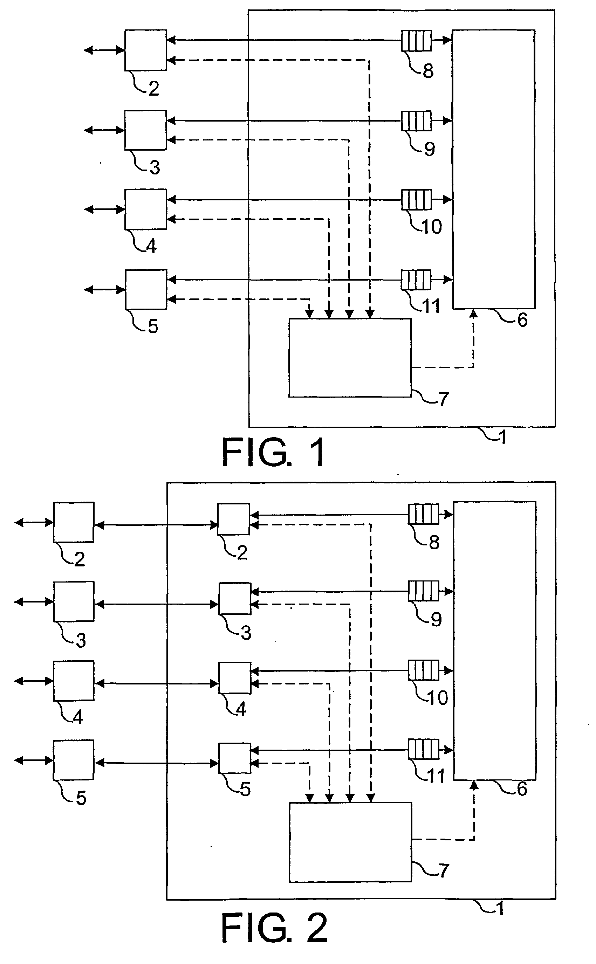

The packet switching device 1 shown in Fig. 1 for packet data transport connects a given number of input ports with the corresponding output ports. Information, such as for example a route and priority level, is determined for the packets arriving at the input port in each case by a port controller 2 to 5 by means of switching tables. Once the packets have been divided into cells, the latter are conveyed to the previously determined output line of the packet switching device 1. The switching steps provided for further switching are explained below.

The packet switching device 1 consists of a switching matrix 6, a switching controller 7 and a number of registers 8 to 11 in the form of logical queues operating according to the FIFO (First In First Out) principle.

An alternative representation of the packet switching device 1 is described in more detail with reference to Fig. 2. In contrast to the packet switching device 1 shown in Fig. 1, the port controller 2 to 5 is subdivided into two parts, wherein one part of the port controller 2 to 5 is in each case integrated into the packet switching device (for "in-band control"). As a result, no separate signaling data and payload data connections are provided at the interface between the first part of the port controller 2 to 5 and the packet switching device 1, but rather just one connection, via which the signaling data and payload data are multiplexed and transmitted jointly to the packet switching device 1.

In order to forward cells, the port controller 2 to 5 generates a route identifier with information relating to the input and destination output of the packet switching device and weighting of the inquiry. The weighting may include details of the priority and category of the packets or the queuing time or length of any queue.

Operation of the packet switching device in the event of joint forwarding of the route identifier and the cell is described below. The port controller 2 to 5 conveys the cell to the packet switching device 1 at the same time as the route identifier. Inside the packet switching device, the route identifier is forwarded to the switching controller 7 and the associated cell to the switching matrix, where it is inserted into a register 8 to 11 operating according to the FIFO (First In First Out) principle.

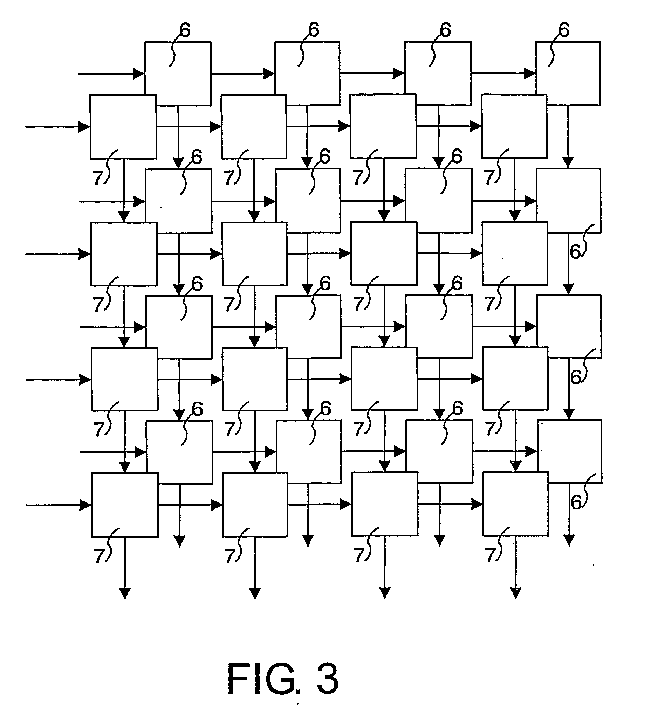

Operation of the packet switching device 1 illustrated in Figs. 1 and 2 is explained in more detail with reference to the diagrams shown in Figs. 3 to 11.

Fig. 3 shows the switching controllers 7 and switching matrices 6 connected to form a cascade. The route identifiers sent from the port controllers (2 to 5) are located at the inputs leading to the cascade of switching controllers 7. The results of the switching controllers located lowermost in a row are the resultant switches.

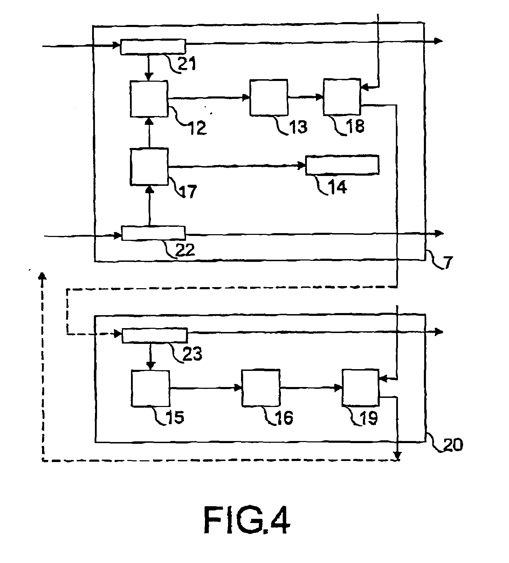

Fig. 4 describes the iterative switching steps of the switching controllers 7 connected to form a cascade. In addition to the switching controller 7, a portion of an adjacent switching controller 20 relevant to result feedback is also shown. The switching controller 20 has a direct connection to the switching controller 7 and is designated the precursor of the switching controller 7. The switching controllers 7 each comprise at least one identifier analyzer 12, one output arbiter 13, one configuration unit 14, one result analyzer 17 and one inquiry cascader 18, together with two refresher units 21 and 22 for amplifying the signals. The portion of the switching controller 20 relevant to signal feedback consists of an identifier grant analyzer 15, a plurality of input arbiters 16, a grant cascader 19 and a refresher unit 23.

The port controller 2 to 5 generates the route identifier, which contains all the destination output numbers of the packet switching device, a plurality of inquiries and their weightings. Said route identifier is forwarded to the switching controller 7, wherein the cells remain in the port controller 2 to 5 and are switched at a later time.

Inside the switching controller 7, the identifier analyzer 12 stores the route identifier signals, refreshed by a refresher 21, for use at a later point for performing iterative switching steps and replaces the destination output numbers with input numbers, such that the source input of the inquiries may be backtracked. At the same time, the refreshed signals are routed on to the next switching controller 7 connected therewith.

The following switching steps are repeated iteratively.

The inquiries processed in the previously performed iterative switching steps, i.e. the connections already granted between the input ports and the output ports of the packet switching device, are stored by the identifier analyzer 12. The modified part of the route identifier for all un-switched inputs is forwarded to the competent output arbiter 13.

A separate output arbiter 13 is responsible for each output port and processes all the inquiries coming from the identifier analyzer 12. On the basis of the interrogated output ports of the inquiries, the output arbiter 13 decides which of the inquiries will be accepted. The selected route identifier is forwarded to an inquiry cascader 18.

The inquiry cascader 18 compares the result of the previous switching controller with the result coming locally from the output arbiter 13. On the basis of the route identifier weighting, the inquiry cascader decides which part of the two results to forward to the subsequent switching controller 7. At the output of the last switching controller 7 in a column, the signal is fed back to the switching controller 20.

Inside the switching controller 20, the signal refreshed by a refresher 23 of the fed-back result is passed to the identifier grant analyzer 15 and at the same time routed on to a next switching controller 7 connected therewith.

The identifier grant analyzer 15 replaces the input number with the destination output number and passes the route identifier on to the competent input arbiter 16.

A separate input arbiter 16 is responsible for each input port and processes the results coming from the identifier analyzer 15. On the basis of the interrogating input port of the granted inquiries the input arbiter 16 decides which of the allocations will be accepted. The selected result is fed to the grant cascader 19.

The grant cascader 19 compares the result of the previous switching controller 20 with the result obtained locally from the input arbiter 16 (accepted allocation). On the basis of the route identifier weighting, the grant cascader 19 decides for each input port which part of the two results to forward to the subsequent switching controller 7.

The result is forwarded by a refresher 22 to the result analyzer 17 in the first column switching controller 7 and communicated to the interrogating port controller 2 to 5. At the same time, the refreshed signals are sent to the next switching controller 7 connected therewith, such that all the relevant switching controllers are informed of this result.

The result analyzer 17 informs the identifier analyzer 12 of the accepted allocations (result).

The granted route identifiers of the result analyzer 17 are collected in the configuration unit 14, before the configuration unit 14 sends them to the configuration registers of the switching matrix 6. In the next step, the switching controller 7 is appropriately reconfigured for transmission of the cells. Once the interrogating port controller 2 to 5 has received the modified route identifier, the cells are only then sent to the switching matrix 6 and subsequently removed from the queue.

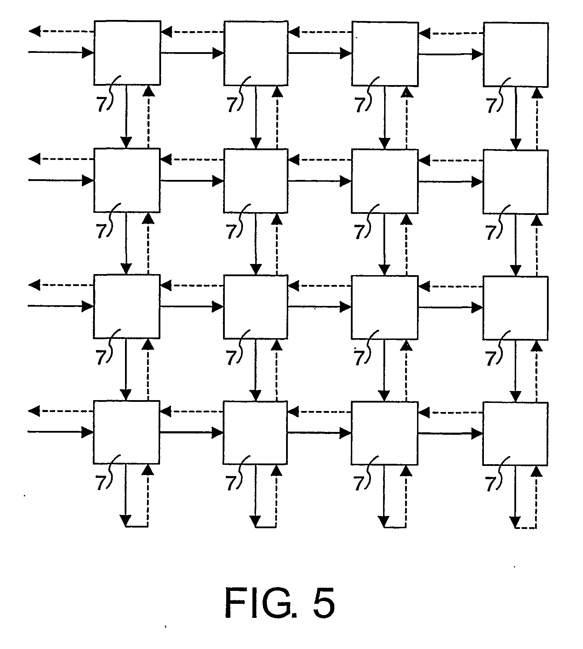

The switching controller 7 illustrated in Fig. 5 shows the circuitry in the event of feedback in the reverse direction. The switching controllers 7 connected to form a cascade match the arrangement described in Fig. 3. In contrast to Fig. 3, the result of the last switching controller in a column is fed back directly to the same switching controller.

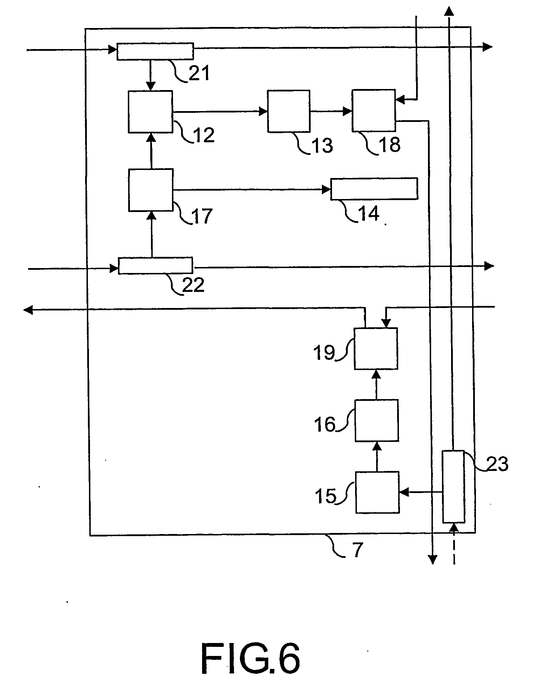

The individual switching steps involved in said feedback are explained with reference to Fig. 6. The result of the last switching controller 7 is determined in accordance with the switching steps described in Fig. 4 and at the last switching controller 7 in a column is reintroduced immediately into the same switching controller 7. To ensure that it reaches the interrogating input port, the result is distributed to all the switching controllers 7 connected with this switching controller 7, wherein the result signal is amplified at each switching controller by a refresher 23.

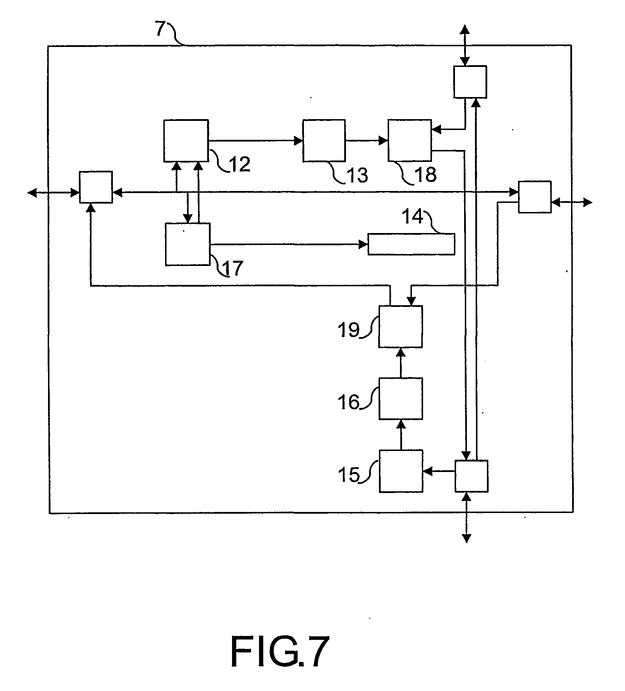

The switching controller illustrated in Fig. 7 consists of the components described in Fig. 6 and fulfills the same functions described with reference to Fig. 6, the difference being that it additionally comprises bidirectional in- and outputs 24.

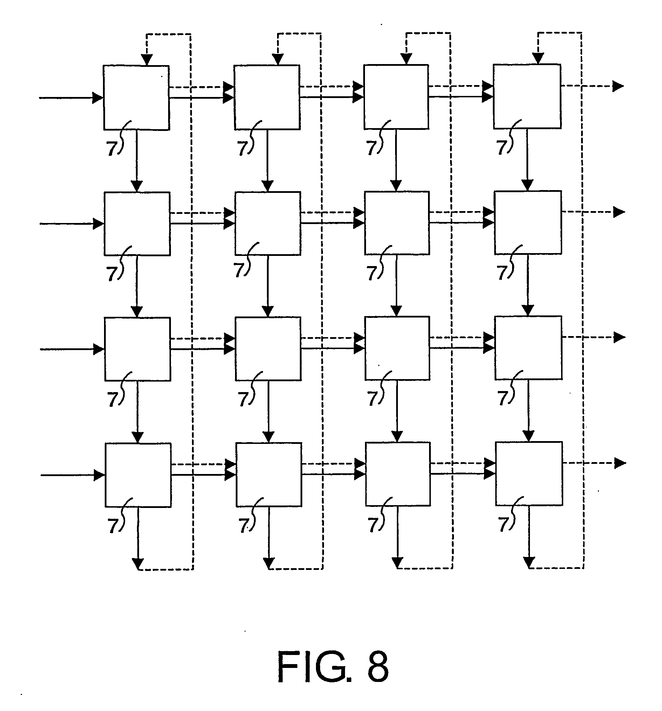

Fig. 8 shows looping back of the switching controllers 7 connected to form a cascade. With this feedback method, the results of the last switching controller 7 in a column are fed to the inputs of the first switching controllers 7 in these columns, such that the connections of the switching controller 7 in the same column are made to form a loop.

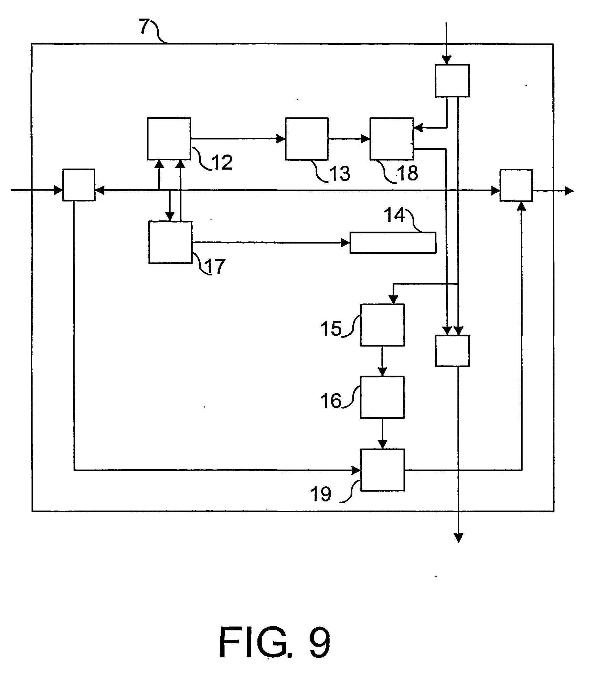

Fig. 9 explains the switching steps of the switching controller with loop-back. The components illustrated in Fig. 9 match the components explained in Fig. 7 and their function. On the basis of the feedback connections connected to form a loop, in- and outputs 24 of the switching controllers 7 are not bidirectional, but rather route the data in one direction to the appropriate components.

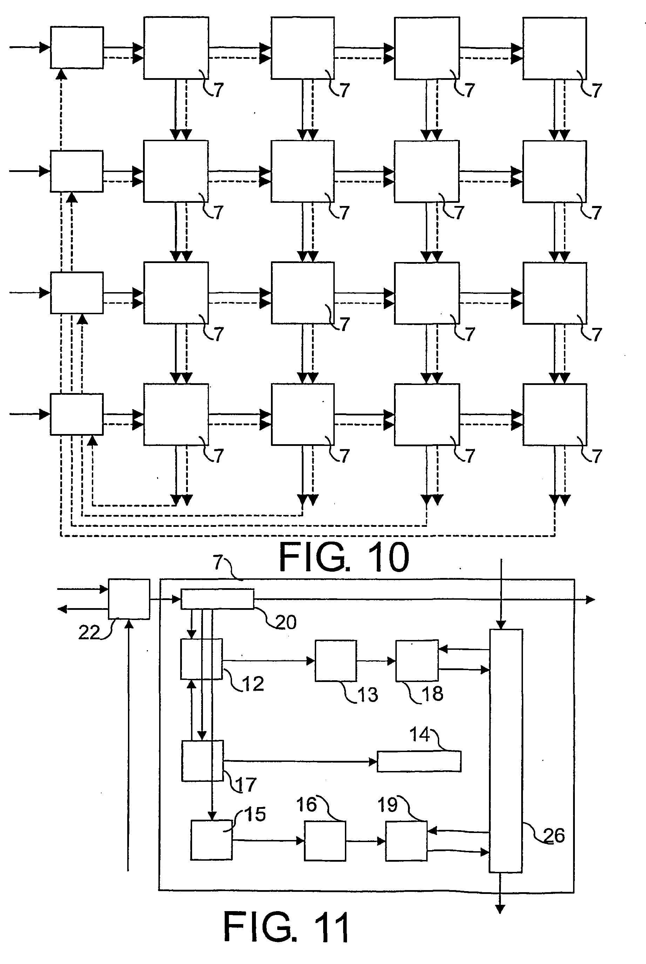

Fig. 10 shows feedback of the results of the switching controllers 7 via an input port multiplexer 25. In contrast to the switching controller 7 described in Fig. 8, the result is multiplexed on feedback with other interrogating route identifiers by an input port multiplexer 25 and passed to the input of the switching controller 7. The output port results are each fed back to the inputs of the same input port.

The switching steps involved in feedback via an input port multiplexer are described with reference to Fig. 11. The switching controller 7 comprises the components described in Fig. 6. In addition, a multiplex component 22 is connected to the input of the switching controller 7 and the in- and outputs of the components 18 and 19 are connected with a further multiplex component 26.

The switching result fed back to the input port is passed in multiplexed manner together with the inquiry to the identifier analyzer 15 by the switching controller 7. At the input of the switching controller 7, the result signal, multiplexed with other route identifier data, is amplified by the refresher 20. Further processing of the route identifier and the operation of the components 13 to 19 of the switching controller 7 match that of the components 13 to 19 described in Fig. 6. In contrast to Fig. 4, the in- and outputs of the components 18 and 19 are connected to a multiplexing component 26, such that the data are applied in appropriately multiplexed form to the in- and outputs of the switching controller 7. Each switching controller 7 selects the result for which the switching controller has a connection to the interrogating port controller. As the process continues, the result is cascaded to the interrogating port controller.

## Claims

1. Packet switching device consisting of a plurality of bufferless switching matrices (6) for connecting input ports with output ports and a plurality of switching controllers (7) for initializing and changing the configuration of the buffereless switching matrices (6), wherein the plurality of switching controllers (7) as well as the plurality of bufferless switching matrices (6) are connected in rows and columns to form a switching controller matrix and respectively a switching matrix, wherein the switching matrices (6) are individually controlled by a switching controller (7), and wherein all switching devices connected in a row receive a same route identifier including at least one inquiry to connect a requesting input port with a destination output port,
**characterized in that** each switching controller (7) comprises:
a) at least one identifier analyzer (12) adapted to
aa) receive a route identifier from a requesting input port including an at least one inquiry for one destination output port;
bb) store the route identifier;
cc) based on the route identifier create a modified route identifier by replacing the destination output ports with the requesting input port;
dd) store connections already granted between input ports and output ports;
ee) forward the modified route identifier to an output arbiter (13);
b) the output arbiter (13) is adapted to
aa) receive the modified route identifier from the identifier analyzer (12);
bb) create a selected modified route identifier by selecting an inquiry in the modified route identifier corresponding to the output port of the respective column to which the switching controller belongs;
cc) forward the selected modified route identifier to an inquiry cascader (18);
c) the inquiry cascader (18) is adapted to
aa) receive the selected modified route identifier from the output arbiter (13);
bb) receive a first result from an inquiry cascader of a previous switching controller, wherein the previous switching controller is located upstream in the same column, and wherein the first result includes an inquiry for the destination output port in the same column;
cc) decide whether the selected modified route identifier or the first result from the inquiry cascader (18) of the previous switching controller is either
aaa) fed back as final first result to identifier grant analyzers (15) of all switching controllers located in the same column, in case the new first result is output by the last switching controller in the column;
bbb) or forwarded as a new first result to a subsequent switching controller located downstream in the same column in the other case, wherein the inquiry included in the final first result is named granted inquiry;
d) the identifier grant analyzer (15) is adapted to
aa) receive the final first result including the granted inquiry from the inquiry cascader (18) of the last switching controller in the same column;
bb) based on the final first result create a modified final first result including the granted inquiry by replacing the requesting input port with the destination output port;
cc) forward the modified final first result to an input arbiter (16);
e) the input arbiter (16) is adapted to,
aa) receive the modified final first result from the identifier grant analyzer (15);
bb) create a selected modified final first result including the modified final first result if the input port in the same row is the requesting input port corresponding to the granted inquiry included in the modified final first result;
cc) forward the selected modified final first result to a grant cascader (19)
f) the grant cascader (19) is adapted to
aa) receive the selected modified final first result from the input arbiter (16);
bb) receive a second result from a grant cascader of a previous switching controller, wherein the previous switching controller is located upstream in the same row, and wherein the second result includes a temporary accepted allocation;
cc) decide whether the selected modified first result or the second result is selected
aaa) either as a new second result to be forwarded to a subsequent switching controller located downstream in the same row; or
bbb) as final second result including a final accepted allocation enabling a requesting input port to connect with a designated output port if the switching controller is the last switching controller in the row;
g) a result analyzer (17) adapted to inform the identifier analyzer (12) about the accepted allocations.

2. Packet switching device consisting of a plurality of bufferless switching matrices (6) for connecting input ports with output ports and a plurality of switching controllers (7) for initializing and changing the configuration of the buffereless switching matrices (6), wherein the plurality of switching controllers (7) as well as the plurality of bufferless switching matrices (6) are connected in rows and columns to form a switching controller matrix and respectively a switching matrix, wherein the switching matrices (6) are individually controlled by a switching controller (7), and wherein all switching devices connected in a row receive a same route identifier including at least one inquiry to connect a requesting input port with a destination output port,
**characterized in that** each switching controller (7) comprises:
a) at least one identifier analyzer (12) adapted to
aa) receive a route identifier from a requesting input port including an at least one inquiry for one destination output port;
bb) store the route identifier;
cc) based on the route identifier create a modified route identifier by replacing the destination output ports with the requesting input port;
dd) store connections already granted between input ports and output ports;
ee) forward the modified route identifier to an output arbiter (13);
b) the output arbiter (13) is adapted to
aa) receive the modified route identifier from the identifier analyzer (12);
bb) create a selected modified route identifier by selecting an inquiry in the modified route identifier corresponding to the output port of the respective column to which the switching controller belongs;
cc) forward the selected modified route identifier to an inquiry cascader (18);
c) the inquiry cascader (18) is adapted to
aa) receive the selected modified route identifier from the output arbiter (13);
bb) receive a first result from an inquiry cascader of a previous switching controller, wherein the previous switching controller is located upstream in the same column, and wherein the first result includes an inquiry for the destination output port in the same column;
cc) decide whether the selected modified route identifier or the first result from the inquiry cascader of the previous switching controller is either uniquely fed back to identifier grant analyzers (15) of all switching controllers located in a row in the switching controller as final first result, in case the new first result is output by the last switching controller in the column or forwarded as a new first result to a subsequent switching controller located downstream in the same column in the other case, wherein the inquiry included in the final first result is named granted inquiry;
d) the identifier grant analyzer (15) is adapted to
aa) receive the final first result including the granted inquiry from the inquiry cascader (18) of one of the last switching controllers in the last row;
bb) based on the final first result create a modified final first result including the granted inquiry by replacing the requesting input port with the destination output port;
cc) forward the modified final first result to an input arbiter (16);
e) the input arbiter (16) is adapted to,
aa) receive the modified final first result from the identifier grant analyzer (15);
bb) create a selected modified final first result including the modified final first result if the input port in the same row is the requesting input port corresponding to the granted inquiry included in the modified final first result;
cc) forward the selected modified final first result to a grant cascader (19)
f) the grant cascader (19) is adapted to
aa) receive the selected modified final first result from the input arbiter (16);
bb) receive a second result from a grant cascader of a previous switching controller, wherein the previous switching controller is located upstream in the same column, and wherein the second result includes a temporary accepted allocation;
cc) decide whether the selected modified first result or the second result is selected
aaa) either as a new second result to be forwarded to a subsequent switching controller located downstream in the same column; or
bbb) as final second result including a final accepted allocation enabling a requesting input port to connect with a designated output port if the switching controller is the last switching controller in the column;
g) a result analyzer (17) adapted to inform the identifier analyzer (12) about the accepted allocations.

## Patentansprüche

1. Paketvermittlungsvorrichtung, bestehend aus einer Mehrzahl von pufferlosen Vermittlungsmatrizen (6) zur Verbindung von Eingangsports mit Ausgangsports und einer Mehrzahl von Vermittlungssteuerungen (7) zur Initialisierung und Veränderung der Konfiguration der pufferlosen Vermittlungsmatrizen (6), wobei sowohl die Mehrzahl von Vermittlungssteuerungen (7) als auch die Mehrzahl von pufferlosen Vermittlungsmatrizen (6) in Zeilen und Spalten verbunden sind, um eine Vermittlungssteuerungsmatrix und jeweils eine Vermittlungsmatrix zu bilden, wobei die Vermittlungsmatrizen (6) einzeln von einer Vermittlungssteuerung (7) gesteuert werden und wobei alle in einer Zeile verbundenen Vermittlungsvorrichtungen eine gleiche Routekennzeichnung empfangen, die mindestens eine Anfrage enthält, um einen anfragenden Eingangsport mit einem Zielausgangsport zu verbinden,
**dadurch gekennzeichnet, dass** jede Vermittlungssteuerung (7) umfasst:
a) mindestens einen Kennzeichnungsanalysator (12), dazu geeignet,
aa) eine Routekennzeichnung von einem anfragenden Eingangsport zu empfangen, die mindestens eine Anfrage für einen Zielausgangsport enthält,
bb) die Routekennzeichnung zu speichern,
cc) aufgrund der Routekennzeichnung eine veränderte Routekennzeichnung durch Ersetzen der Zielausgangsports durch den anfragenden Eingangsport zu bilden,
dd) zwischen Eingangsports und Ausgangsports bereits erteilte Verbindungen zu speichern,
ee) die veränderte Routekennzeichnung an einen Ausgangszuteiler (13) weiterzuleiten,
b) wobei der Ausgangszuteiler (13) dazu geeignet ist,
aa) die veränderte Routekennzeichnung von dem Kennzeichnungsanalysator (12) zu empfangen,
bb) eine ausgewählte veränderte Routekennzeichnung zu bilden durch Auswahl einer Anfrage in der veränderten Routekennzeichnung, die dem Ausgangsport der jeweiligen Spalte entspricht, zu welcher die Vermittlungssteuerung gehört,
cc) die ausgewählte veränderte Routekennzeichnung an einen Anfragekaskadierer (18) weiterzuleiten,
c) wobei der Anfragekaskadierer (18) dazu geeignet ist,
aa) die ausgewählte veränderte Routekennzeichnung von dem Ausgangszuteiler (13) zu empfangen,
bb) ein erstes Ergebnis von einem Anfragekaskadierer einer vorangehenden Vermittlungssteuerung zu empfangen, wobei die vorangehende Vermittlungssteuerung in derselben Spalte oberhalb liegt und wobei das erste Ergebnis eine Anfrage für den Zielausgangsport in derselben Spalte enthält,
cc) zu entscheiden, ob die ausgewählte veränderte Routekennzeichnung oder das erste Ergebnis von dem Anfragekaskadierer (18) der vorangehenden Vermittlungssteuerung entweder
aaa) als endgültiges erstes Ergebnis zu Kennzeichnungserteilungsanalysatoren (15) aller in derselben Spalte liegenden Vermittlungssteuerungen zurückgeführt wird, falls das neue erste Ergebnis von der letzten Vermittlungssteuerung in der Spalte ausgegeben wird,
bbb) oder andernfalls als ein neues erstes Ergebnis an eine nachfolgende, weiter unten in derselben Spalte liegende Vermittlungssteuerung weiterzuleiten, wobei die im endgültigen ersten Ergebnis enthaltene Anfrage als erteilte Anfrage bezeichnet wird,
d) wobei der Kennzeichnungserteilungsanalysator (15) dazu geeignet ist,
aa) das endgültige erste Ergebnis einschließlich der erteilten Anfrage von dem Anfragekaskadierer (18) der letzten Vermittlungssteuerung in derselben Spalte zu empfangen,
bb) aufgrund des endgültigen ersten Ergebnisses ein verändertes, die erteilte Anfrage enthaltendes endgültiges erstes Ergebnis durch Ersetzen des anfragenden Eingangsports durch den Zielausgangsport zu bilden,
cc) das veränderte endgültige erste Ergebnis an einen Eingangszuteiler (16) weiterzuleiten,
e) wobei der Eingangszuteiler (16) dazu geeignet ist,
aa) das veränderte endgültige erste Ergebnis von dem Kennzeichnungserteilungsanalysator (15) zu empfangen,
bb) ein ausgewähltes verändertes endgültiges erstes Ergebnis einschließlich des veränderten endgültigen ersten Ergebnisses zu bilden, wenn der Eingangsport in derselben Zeile der anfragende Eingangsport ist, der der in dem veränderten endgültigen ersten Ergebnis enthaltenen erteilten Anfrage entspricht,
cc) das ausgewählte veränderte endgültige erste Ergebnis an einen Erteilungskaskadierer (19) weiterzuleiten,
f) wobei der Erteilungskaskadierer (19) dazu geeignet ist,
aa) das ausgewählte veränderte endgültige erste Ergebnis von dem Eingangszuteiler (16) zu empfangen,
bb) ein zweites Ergebnis von einem Erteilungskaskadierer einer vorangehenden Vermittlungssteuerung zu empfangen, wobei die vorangehende Vermittlungssteuerung in derselben Zeile oberhalb liegt und wobei das zweite Ergebnis eine vorübergehend akzeptierte Zuordnung enthält,
cc) zu entscheiden, ob das ausgewählte veränderte erste Ergebnis oder das zweite Ergebnis ausgewählt wird
aaa) entweder als ein neues, an eine nachfolgende, in derselben Zeile weiter unten liegende Vermittlungssteuerung weiterzuleitendes zweites Ergebnis, oder
bbb) als endgültiges, eine endgültige akzeptierte Zuordnung enthaltendes zweites Ergebnis, das es einem anfragenden Eingangsport ermöglicht, sich mit einem bezeichneten Ausgangsport zu verbinden, wenn die Vermittlungssteuerung die letzte Vermittlungssteuerung in der Zeile ist,
g) einen Ergebnisanalysator (17), dazu geeignet, den Kennzeichnungsanalysator (12) über die akzeptierten Zuordnungen zu informieren.

2. Paketvermittlungsvorrichtung, bestehend aus einer Mehrzahl von pufferlosen Vermittlungsmatrizen (6) zur Verbindung von Eingangsports mit Ausgangsports und einer Mehrzahl von Vermittlungssteuerungen (7) zur Initialisierung und Veränderung der Konfiguration der pufferlosen Vermittlungsmatrizen (6), wobei sowohl die Mehrzahl von Vermittlungssteuerungen (7) als auch die Mehrzahl von pufferlosen Vermittlungsmatrizen (6) in Zeilen und Spalten verbunden sind, um eine Vermittlungssteuerungsmatrix und jeweils eine Vermittlungsmatrix zu bilden, wobei die Vermittlungsmatrizen (6) einzeln von einer Vermittlungssteuerung (7) gesteuert werden und wobei alle in einer Zeile verbundenen Vermittlungsvorrichtungen eine gleiche Routekennzeichnung empfangen, die mindestens eine Anfrage enthält, um einen anfragenden Eingangsport mit einem Zielausgangsport zu verbinden,
**dadurch gekennzeichnet, dass** jede Vermittlungssteuerung (7) umfasst:
a) mindestens einen Kennzeichnungsanalysator (12), dazu geeignet,
aa) eine Routekennzeichnung von einem anfragenden Eingangsport zu empfangen, die mindestens eine Anfrage für einen Zielausgangsport enthält,
bb) die Routekennzeichnung zu speichern,
cc) aufgrund der Routekennzeichnung eine veränderte Routekennzeichnung durch Ersetzen der Zielausgangsports durch den anfragenden Eingangsport zu bilden,
dd) zwischen Eingangsports und Ausgangsports bereits erteilte Verbindungen zu speichern,
ee) die veränderte Routekennzeichnung an einen Ausgangszuteiler (13) weiterzuleiten,
b) wobei der Ausgangszuteiler (13) dazu geeignet ist,
aa) die veränderte Routekennzeichnung von dem Kennzeichnungsanalysator (12) zu empfangen,
bb) eine ausgewählte veränderte Routekennzeichnung zu bilden durch Auswahl einer Anfrage in der veränderten Routekennzeichnung, die dem Ausgangsport der jeweiligen Spalte entspricht, zu welcher die Vermittlungssteuerung gehört,
cc) die ausgewählte veränderte Routekennzeichnung an einen Anfragekaskadierer (18) weiterzuleiten,
c) wobei der Anfragekaskadierer (18) dazu geeignet ist,
aa) die ausgewählte veränderte Routekennzeichnung von dem Ausgangszuteiler (13) zu empfangen,
bb) ein erstes Ergebnis von einem Anfragekaskadierer einer vorangehenden Vermittlungssteuerung zu empfangen, wobei die vorangehende Vermittlungssteuerung in derselben Spalte oberhalb liegt und wobei das erste Ergebnis eine Anfrage für den Zielausgangsport in derselben Spalte enthält,
cc) zu entscheiden, ob die ausgewählte veränderte Routekennzeichnung oder das erste Ergebnis von dem Anfragekaskadierer der vorangehenden Vermittlungssteuerung entweder als endgültiges erstes Ergebnis einzig zu Kennzeichnungserteilungsanalysatoren (15) aller Vermittlungssteuerungen, die in einer Zeile in der Vermittlungssteuerung liegen, zurückgeführt wird, falls das neue erste Ergebnis von der letzten Vermittlungssteuerung in der Spalte ausgegeben wird, oder andernfalls als ein neues erstes Ergebnis an eine nachfolgende, weiter unten in derselben Spalte liegende Vermittlungssteuerung weitergeleitet wird, wobei die im endgültigen ersten Ergebnis enthaltene Anfrage als erteilte Anfrage bezeichnet wird,
d) wobei der Kennzeichnungserteilungsanalysator (15) dazu geeignet ist,
aa) das endgültige erste Ergebnis einschließlich der erteilten Anfrage von dem Anfragekaskadierer (18) von einer der letzen Vermittlungssteuerungen in der letzen Zeile zu empfangen,
bb) aufgrund des endgültigen ersten Ergebnisses ein verändertes, die erteilte Anfrage enthaltendes endgültiges erstes Ergebnis durch Ersetzen des anfragenden Eingangsports durch den Zielausgangsport zu bilden,
cc) das veränderte endgültige erste Ergebnis an einen Eingangszuteiler (16) weiterzuleiten,
e) wobei der Eingangszuteiler (16) dazu geeignet ist,
aa) das veränderte endgültige erste Ergebnis von dem Kennzeichnungserteilungsanalysator (15) zu empfangen,
bb) ein ausgewähltes verändertes endgültiges erstes Ergebnis einschließlich des veränderten endgültigen ersten Ergebnisses zu bilden, wenn der Eingangsport in derselben Zeile der anfragende Eingangsport ist, der der in dem veränderten endgültigen ersten Ergebnis enthaltenen erteilten Anfrage entspricht,
cc) das ausgewählte veränderte endgültige erste Ergebnis an einen Erteilungskaskadierer (19) weiterzuleiten,
f) wobei der Erteilungskaskadierer (19) dazu geeignet ist,
aa) das ausgewählte veränderte endgültige erste Ergebnis von dem Eingangszuteiler (16) zu empfangen,
bb) ein zweites Ergebnis von einem Erteilungskaskadierer einer vorangehenden Vermittlungssteuerung zu empfangen, wobei die vorangehende Vermittlungssteuerung in derselben Spalte oberhalb liegt und wobei das zweite Ergebnis eine vorübergehend akzeptierte Zuordnung enthält,
cc) zu entscheiden, ob das ausgewählte veränderte erste Ergebnis oder das zweite Ergebnis ausgewählt wird
aaa) entweder als ein neues, an eine nachfolgende, in derselben Spalte weiter unten liegende Vermittlungssteuerung weiterzuleitendes zweites Ergebnis, oder
bbb) als endgültiges, eine endgültige akzeptierte Zuordnung enthaltendes zweites Ergebnis, das es einem anfragenden Eingangsport ermöglicht, sich mit einem bezeichneten Ausgangsport zu verbinden, wenn die Vermittlungssteuerung die letzte Vermittlungssteuerung in der Spalte ist,
g) einen Ergebnisanalysator (17), dazu geeignet, den Kennzeichnungsanalysator (12) über die akzeptierten Zuordnungen zu informieren.

## Revendications

1. Dispositif de commutation de paquets comportant une pluralité de matrices de commutation sans tampons (6) pour la connexion de ports d'entrée avec des ports de sortie et une pluralité de contrôleurs de commutation (7) pour initialiser et modifier la configuration des matrices de commutation sans tampons (6), dans lequel la pluralité de contrôleurs de commutation (7) ainsi que la pluralité des matrices de commutation sans tampons (6) sont raccordées en lignes et en colonnes pour former une matrice de contrôleur de commutation et respectivement une matrice de commutation, dans lequel les matrices de commutation (6) sont contrôlées individuellement par un contrôleur de commutation (7), et dans lequel tous les dispositifs de commutation raccordés à une ligne reçoivent un même identifiant de route contenant au moins une requête pour raccorder un port d'entrée qui en fait la requête à un port de sortie destination,
**caractérisé par le fait que** chacun des contrôleurs de commutation (7) comprend :
a) au moins un analyseur d'identifiant (12) adapté pour
aa) recevoir un identifiant de route d'un port d'entrée qui en fait la requête contenant au moins une requête pour un port de sortie destination ;
bb) stocker l'identifiant de route ;
cc) en fonction de l'identifiant de route, créer un identifiant de route modifié par le remplacement des ports de sortie destination par le port d'entrée qui en fait la requête ;
dd) stocker les connexions déjà attribuées entre des portes d'entrée et des ports de sortie ;
ee) transmettre l'identifiant de route modifié vers un dispositif d'arbitrage de sortie (13) ;
b) le dispositif d'arbitrage de sortie (13) est adapté pour
aa) recevoir l'identifiant de route modifié venant de l'analyseur d'identifiant (12) ;
bb) créer un identifiant de route modifié sélectionné en choisissant une requête dans l'identifiant de route modifié correspondant au port de sortie de la colonne respective à laquelle appartient le contrôleur de commutation ;
cc) transmettre à un dispositif de cascadage de requêtes (18) l'identifiant de route modifié sélectionné ;
c) le dispositif de cascadage de requêtes (18) est adapté pour
aa) recevoir l'identifiant de route modifié sélectionné provenant du dispositif d'arbitrage de sortie (13) ;
bb) recevoir un premier résultat venant d'un dispositif de cascadage de requête d'un contrôleur de commutation précédent, où le contrôleur de commutation précédent est situé en amont dans la même colonne, et où le premier résultat contient une requête pour le port de sortie destination dans la même colonne ;
cc) décider si l'identifiant de route modifié sélectionné ou si le premier résultat provenant du dispositif de cascadage de requête (18) du contrôleur de commutation précédent est soit
aaa) renvoyé comme premier résultat final aux analyseurs d'affectation d'identifiant (15) de tous les contrôleurs de commutation situés dans la même colonne, dans le cas où le nouveau premier résultat est généré par le dernier contrôleur de commutation de la colonne ;
bbb) ou envoyé en tant que nouveau premier résultat vers un contrôleur de commutation suivant situé en aval dans la même colonne dans le cas contraire, où la requête incluse dans le premier résultat final est désignée sous le terme de requête affectée ;
d) l'analyseur d'identifiant affecté (15) est adapté pour
aa) recevoir le premier résultat final incluant la requête affectée provenant du dispositif de cascadage de requête (18) du dernier contrôleur de commutation de la même colonne ;
bb) en fonction du premier résultat final, créer un premier résultat final modifié incluant la requête affectée, par le remplacement du port d'entrée effectuant la requête par le port de sortie destination ;
cc) envoyer le premier résultat final modifié vers un dispositif d'arbitrage d'entrée (16) ;
e) le dispositif d'arbitrage d'entrée (16) est adapté pour
aa) recevoir le premier résultat final modifié provenant de l'analyseur d'identifiant affecté (15) ;
bb) créer un premier résultat final modifié sélectionné incluant le premier résultat final modifié si le port d'entrée de la même ligne est le port d'entrée ayant effectué la requête correspondant à la requête affectée incluse dans le premier résultat final modifié ;
cc) envoyer le premier résultat final modifié sélectionné à un dispositif de cascadage d'affectation (19) ;
f) le dispositif de cascadage d'affectation (19) est adapté pour
aa) recevoir le premier résultat final modifié sélectionné provenant du dispositif d'arbitrage d'entrée (16) ;
bb) recevoir un deuxième résultat d'un dispositif de cascadage d'affectation d'un contrôleur de commutation précédent, où le contrôleur de commutation précédent est situé en amont dans la même ligne, et où le deuxième résultat indique une affectation temporairement acceptée ;
cc) décider si le premier résultat modifié sélectionné ou le deuxième résultat est sélectionné
aaa) soit en tant que nouveau deuxième résultat à envoyer au contrôleur de commutation suivant situé en aval dans la même ligne ; ou
bbb) en tant que deuxième résultat final incluant une affectation acceptée finale permettant à un port d'entrée qui en effectue la requête de se connecter à un port de sortie désigné si le contrôleur de commutation est le dernier contrôleur de commutation de la ligne ;
g) un analyseur de résultat (17) adapté pour informer l'analyseur d'identifiant (12) sur les affectations acceptées.

2. Dispositif de commutation de paquets comportant une pluralité de matrices de commutation sans tampons (6) pour la connexion de ports d'entrée avec des ports de sortie et une pluralité de contrôleurs de commutation (7) pour initialiser et modifier la configuration des matrices de commutation sans tampons (6), dans lequel la pluralité de contrôleurs de commutation (7) ainsi que la pluralité des matrices de commutation sans tampons (6) sont raccordées en lignes et en colonnes pour former une matrice de contrôleur de commutation et respectivement une matrice de commutation, dans lequel les matrices de commutation (6) sont contrôlées individuellement par un contrôleur de commutation (7), et dans lequel tous les dispositifs de commutation raccordés à une ligne reçoivent un même identifiant de route contenant au moins une requête pour raccorder un port d'entrée qui en fait la requête à un port de sortie destination,
**caractérisé par le fait que** chacun des contrôleurs de commutation (7) comprend :
a) au moins un analyseur d'identifiant (12) adapté pour
aa) recevoir un identifiant de route d'un port d'entrée qui en fait la requête contenant au moins une requête pour un port de sortie destination ;
bb) stocker l'identifiant de route ;
cc) en fonction de l'identifiant de route, créer un identifiant de route modifié par le remplacement des ports de sortie destination par le port d'entrée qui en fait la requête ;
dd) stocker les connexions déjà attribuées entre des ports d'entrée et des ports de sortie ;
ee) transmettre l'identifiant de route modifié vers un dispositif d'arbitrage de sortie (13) ;
b) le dispositif d'arbitrage de sortie (13) est adapté pour
aa) recevoir l'identifiant de route modifié venant de l'analyseur d'identifiant (12) ;
bb) créer un identifiant de route modifié sélectionné en choisissant une requête dans l'identifiant de route modifié correspondant au port de sortie de la colonne respective à laquelle appartient le contrôleur de commutation ;
cc) transmettre l'identifiant de route modifié sélectionné à un dispositif de cascadage de requêtes (18) ;
c) le dispositif de cascadage de requêtes (18) est adapté pour :
aa) recevoir l'identifiant de route modifié sélectionné provenant du dispositif d'arbitrage de sortie (13) ;
bb) recevoir un premier résultat venant d'un dispositif de cascadage de requête d'un contrôleur de commutation précédent, où le contrôleur de commutation précédent est situé en amont dans la même colonne, et où le premier résultat contient une requête pour le port de sortie destination dans la même colonne ;
cc) décider si l'identifiant de route modifié sélectionné ou si le premier résultat provenant du dispositif de cascadage de requête du contrôleur de commutation précédent est soit renvoyé de manière unique vers les analyseurs d'affectation d'identifiant (15) de tous les contrôleurs de commutation situés dans une ligne du contrôleur de commutation en tant que premier résultat final, dans le cas où le nouveau premier résultat est généré par le dernier contrôleur de commutation de la colonne, soit envoyé en tant que nouveau premier résultat vers un contrôleur de commutation suivant situé en aval dans la même colonne dans le cas contraire, où la requête incluse dans le premier résultat final est désignée sous le terme de requête affectée ;
d) l'analyseur d'identifiant affecté (15) est adapté pour
aa) recevoir le premier résultat final incluant la requête affectée provenant du dispositif de cascadage de requête (18) de l'un des derniers contrôleurs de commutation de la dernière ligne ;
bb) en fonction du premier résultat final, créer un premier résultat final modifié incluant la requête affectée, par le remplacement du port d'entrée effectuant la requête par le port de sortie destination ;
cc) envoyer le premier résultat final modifié vers un dispositif d'arbitrage d'entrée (16) ;
e) le dispositif d'arbitrage d'entrée (16) est adapté pour
aa) recevoir le premier résultat final modifié provenant de l'analyseur d'identifiant affecté (15) ;
bb) créer un premier résultat final modifié sélectionné incluant le premier résultat final modifié si le port d'entrée de la même ligne est le port d'entrée ayant effectué la requête correspondant à la requête affectée incluse dans le premier résultat final modifié ;
cc) envoyer le premier résultat final modifié sélectionné à un dispositif de cascadage d'affectation (19) ;
f) le dispositif de cascadage d'affectation (19) est adapté pour
aa) recevoir le premier résultat final modifié sélectionné provenant du dispositif d'arbitrage d'entrée (16) ;
bb) recevoir un deuxième résultat d'un dispositif de cascadage d'un contrôleur de commutation précédent, où le contrôleur de commutation précédent est situé est amont dans la même ligne et où le deuxième résultat contient une affectation temporairement acceptée ;
cc) décider si le premier résultat modifié sélectionné ou le deuxième résultat est sélectionné
aaa) soit en tant que nouveau deuxième résultat à envoyer à un contrôleur de commutation suivant situé en aval dans la même ligne ; ou
bbb) en tant que deuxième résultat final incluant l'affectation acceptée final permettant à un port d'entrée qui en effectue la requête de se connecter à un port de sortie désigné si le contrôleur de commutation est le dernier contrôleur de commutation de la ligne ;
g) un analyseur de résultat (17) adapté pour informer l'analyseur d'identifiant (12) sur les affectations acceptées.
